# EUROPEAN PATENT APPLICATION

(11) **EP 3 165 345 A1**
(43) Date of publication of application: **10.05.2017**
(21) Application number: 15193202.7
(22) Date of filing: 05.11.2015
(51) Int. Cl.: B29C 49/42, B65G 51/03

(54) **CONVEYOR FOR CONVEYING PREFORMS OR SIMILAR OBJECTS AND SYSTEM FOR ORIENTING OBJECTS**

(71) Applicant: BONINO S.p.A. con unico azionista, I-15121 Alessandria (IT)
(72) Inventor: BONINO, Alessandro, 15121 Alessandria (IT); GASPARINI, Enrico Maria, 15121 Alessandria (IT)
(74) Representative: Leihkauf, Steffen Falk

(57) **Abstract**

A conveyor (1) for conveying a single row of preforms (2) or similar objects of the type having a hollow body (3) extending along a longitudinal axis (4) and having a closed end (5) and an opposite open end (6),
the conveyor (1) comprising a channel (9) extending along a conveying path (10) and suitable for receiving a single row of preforms (2), and one or more support and sliding surfaces (11) extending along the conveying path (10) and suitable for supporting the preforms (2) in the channel (9), in which the single preforms (2) are hung in the channel (9) with the open end (6) facing upward and with the closed end (5) facing downward,
in which the conveyor (1) comprises a blowing system (12) with a row of blowing openings (14) positioned at an upper wall (15) of the channel (9) and directed in tilted manner in the conveying direction (10') and downward.

## Description

The present invention relates in general to systems and methods for arranging a plurality of substantially identically shaped objects in sequence with a predetermined orientation, in order to supply such objects in a controlled manner to successive processing steps. In particular, the invention relates to a linear or "row" conveyor of thermoplastic preforms for producing containers by means of blow molding. In order to be properly grasped by the spacer star wheel positioned at the inlet of the blowing module, all preforms must be arranged in a row with no empty spaces and have the same sure and predetermined orientation.

Taking as an example a typical preform with a blowable body, for example substantially hollow cylindrical, extending along a longitudinal axis and having a closed end and an opposite open end, possibly formed in an externally threaded opening portion from which also a reference flange can protrude, the predetermined orientation can be obtained by means of an orientation system for preforms, which can comprise:
- a crate-tipping device suitable for receiving crates containing the loose preforms and for transferring the loose preforms from the crates into a hopper (course supply),
- a conveyor belt positioned to pick the preforms from the hopper and to transport them loose to a supply area of an orienting device,
- an orienting device configured to arrange the preforms in a row and with a predetermined orientation, suitable for supplying the preforms to the blowing module,
- a linear conveyor which receives the preforms oriented by the orienting device and conveys them into a single row, moving them close to one another, up to the inlet of the blowing module.

The predetermined orientation of the preforms is usually an orientation in which the open end (opening portion) of the hollow body of the preform is facing upward and the closed end of the hollow body of the preform is facing downward.

A linear conveyor of the state of the art comprises a support structure which forms:
- a channel extending along a conveying path and suitable for receiving a single row of preforms,
- one or more support and sliding surfaces extending along the conveying path and suitable for supporting the preforms in the channel,
- a blowing system which directs a plurality of compressed air flows into the channel with a flow component facing in a conveying direction, so that the thrust of the flow component on the preforms received in the channel moves the preforms in the conveying direction along the conveying path.

The blowing system of the known art comprises two rows of air outlet openings, positioned in two side walls arranged on two opposite sides of the channel, and directed in substantially horizontal direction in the channel.

The supply of the two separate opening lines with compressed air on two opposite sides of the conveyor involves a high consumption of compressed air and of electric energy, and also high costs for pneumatic conductors and for making the blowing openings.

By blowing onto the preforms from two opposing sides of the channel, at least a part of the thrust component of both air flows is canceled and the air volume to be eliminated from the channel could create secondary flows in the direction opposite to the one desired.

With the preforms hung in the channel with the opening facing upward, the two side blows of air hit the convex outer surface of the preforms and are deflected in not easily controllable manner with reference to the direction of the resulting thrust force both on the preform directly involved and on the adjacent preforms. This all contributes to an increased consumption of energy.

Lastly, but not least importantly, the two-sided blowing system involves unwanted overall side dimensions of the conveyor and any maintenance operations on the blowing system require a free access on both sides of the conveyor.

It is therefore the object of the present invention to make available a single row conveyor for preforms having such features as to obviate at least some of the drawbacks of the known art.

It is a particular object of the invention to propose a single row conveyor for preforms having such features as to reduce the consumption of energy and of compressed air and to simplify the structure and maintenance of the blowing system.

These and other objects are achieved by means of a conveyor according to claim 1.

The dependent claims relate to advantageous embodiments.

According to one aspect of the invention, a conveyor for receiving and conveying a single row of preforms of the type having a hollow body extending along a longitudinal axis and having a closed end and an opposite open end, possibly formed in an externally threaded opening portion from which also a reference flange can protrude, comprises:
- a support structure which forms a channel extending along a conveying path and suitable for receiving a single row of preforms, and one or more support and sliding surfaces extending along the conveying path and suitable for supporting the preforms in the channel, in which the single preforms are hung in the channel with the open end facing upward and with the closed end facing downward,
- a blowing system which directs a plurality of air flows into the channel with a flow component facing in a conveying direction, so that the thrust of the flow component on the preforms received in the channel moves the preforms in the conveying direction along the conveying path,
characterized in that the blowing system forms a row of blowing openings positioned at an upper wall of the channel and directed in tilted manner in the conveying direction and downward.

Thus, the blowing openings blow directly into the upper opening of the preforms and hit concave inner surfaces which deflect the air flow and the resulting thrust force in targeted manner in the conveying direction.

By blowing from the top, it is also possible to reduce the number of blowing openings and the flow rate of pumped or compressed air required for the conveying. Thus, the consumption of energy and the structural complexity of the conveyor are reduced with respect to the prior art.

Finally, due to the positioning at the upper wall of the blowing openings, it is possible to reduce the overall dimensions of side walls or at least partly eliminate the side walls of conveyor, in addition to not requiring free access spaces on both sides of the conveyor for any maintenance operations.

To better understand the invention and appreciate its advantages, non-limiting embodiments thereof are described below, while referring to the drawings, in which:

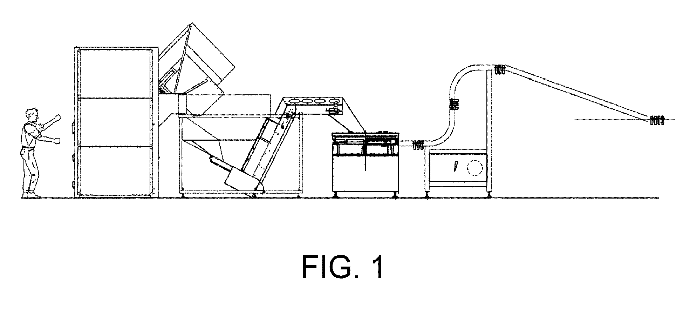

figure 1 shows a preform orientation system for manufacturing PET bottles of the known art,
figure 2 is a sectional view of an in-line conveyor for preforms according to an in-house prior art of the Applicant (not published by the Applicant) hereby represented in order to make the advantages of the invention more apparent,
figure 3 is a sectional view of an in-line conveyor for preforms according to one embodiment of the invention,
figures 4 and 5 are side views, which are partly transparent or cut away to make concealed details visible, of the conveyor for preforms in figure 3,
figure 6 is a further sectional view of the conveyor for preforms in figure 3,
figure 7 is an enlarged view of a detail in figure 4.

The drawings show a conveyor 1 for receiving and conveying a single row of preforms 2 of the type having a hollow body 3 extending along a longitudinal axis 4 and having a closed end 5 and an opposite open end 6, possibly formed in an externally threaded opening portion from which a reference flange 7 protrudes.

Conveyor 1 comprises a support structure 8 which forms a channel 9 extending along a conveying path 10 (rectilinear or curved) and suitable for receiving a single row of preforms 2, and one or more support and sliding surfaces 11 extending along the conveying path 10 and suitable for supporting the preforms 2 in channel 9, in which the single preforms 2 are hung in channel 9 with the open end 6 facing upward and with the closed end 5 facing downward.

Conveyor 1 further comprises a blowing system 12 which directs a plurality of air flows 13 into channel 9 with a flow component facing the conveying direction 10, so that the thrust of the flow component on the preforms 2 received in channel 9 moves the preforms 2 in the conveying direction 10 along the conveying path.

The blowing system 12 forms a row of blowing openings 14 positioned at an upper wall 15 of channel 9 and directed in tilted manner in the conveying direction 10 and downward.

Thus, the blowing openings 14 blow directly into the upper openings of the preforms 2 and hit concave inner surfaces which deflect the air flow and the resulting thrust force in targeted manner in the conveying direction 10.

By blowing from the top, it is also possible to reduce the number of blowing openings and the flow rate of pumped or compressed air required for the conveying. Thus, the consumption of energy and the structural complexity of the conveyor are reduced with respect to the prior art.

Finally, due to the positioning of the blowing openings at the upper wall 15, it is possible to reduce the overall dimensions of side walls or at least partly eliminate the side walls of conveyor 1, in addition to not requiring free access spaces on both sides of conveyor 1 for any maintenance operations.

According to one embodiment, the upper wall 15 comprises a first profile, preferably of extruded aluminum, having a generically U-shaped section (perpendicular to the conveying direction 10) with the closed base 16 facing upward and with two side legs 17 protruding from base 16 downward, and also a second profile, preferably of metal sheet or of plastic, having, in section (perpendicular to the conveying direction 10), a middle portion 18, preferably planar, which closes the open side of the first U-shaped profile from the bottom, thus delimiting an inner cavity 28, and also two side edges 19 bent toward the top and toward the inside of the upper wall 15 and which engage each a respective groove 20 formed on the outer surface of each side leg 17 of the first profile.

The engagement between the first and second profile can be a snap engagement or an engagement by means of reciprocal insertion in conveying direction, possibly further fixed by means of rivets, screws or gluing.

A plurality of bosses 21 protruding upward (or in other words, toward the inside of the upper wall 15) and open on the side opposite to the conveying direction is formed in the middle portion 18 of the second profile so as to define the aforesaid blowing openings 14 with passage of air downward and in the conveying direction.

Thus, the blowing openings 14 do not protrude into channel 9, which subsequently can be made with a reduced height and only slightly greater with respect to the upper end of the preforms 2 received therein.

Alternatively, the bosses 21 can protrude downward (or in other words, toward the inside of channel 9) and can be open on the side facing the conveying direction so as to define the aforesaid blowing openings 14 with passage of air downward and in the conveying direction.

Preferably, the blowing openings 14 are arranged in a single row extending along the conveying path and centrally aligned with respect to the upper wall 15.

In one embodiment, the support surfaces 11 are formed by two elongated support plates 23, (continuous or interrupted), extending along the conveying path 10, the plates 23 being horizontally spaced apart from each other (in direction transverse to the conveying direction 10) so as to delimit a guide slot 22 below the upper wall 15, in which guide slot 22 the preforms 2 are slidably hung, e.g. by means of a free abutment or resting of the reference flange 7 on the two support plates 23.

The elongated plates 23 can be connected to the upper wall 15 by means of one or more side connectors 24 or walls which determine the exact relative position between the upper wall 15 and the support surfaces 11.

Advantageously, the side connectors 24 or walls are not continuous, rather they are only present in discrete positions along the length of conveyor 1, e.g. at the ends thereof and possibly in one or more intermediate positions, spaced apart from the ends. Thus, channel 9 in which the preforms 2 are hung is configured as an open channel, the interior of which is easily accessible from below, e.g. through the guide slot 22, and/or from the two opposite lateral sides, e.g. through side gaps 25 between the upper wall 15 and the support plates 23.

This facilitates controlling the conveying process, visually or by means of external optical sensors, and makes maintenance operations easy and simplifies resolving jamming. Furthermore, a channel open on several sides facilitates quick removal of the air volume introduced into the channel and obviates the formation of unplanned aerodynamic flows and thrusts which are difficult to control.

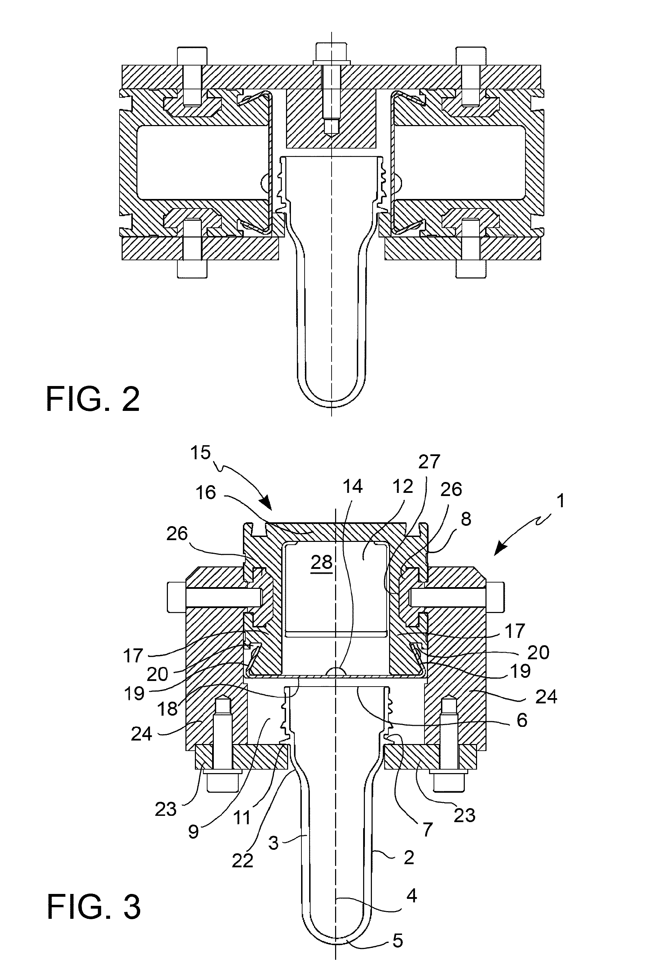

In one embodiment, the side connectors 24 are connected to the upper wall 15 and/or to the support plates 23 by means of screwing with an auxiliary insert 26 slidingly positioned in a fixing groove 27 and adjustable in position along the conveying path 10. The fixing groove(s) 27 are formed in the upper wall 15, for example in the outer surfaces of the side leg of the first U-shaped portion. The fixing groove 27 and the auxiliary insert 26 can both have a T-shaped section (as shown in figure 3) so that screwing the side connector 24 tightens the auxiliary insert 26 against the fixing groove 27, thus blocking the auxiliary insert 26 and the side connector 24 in position.

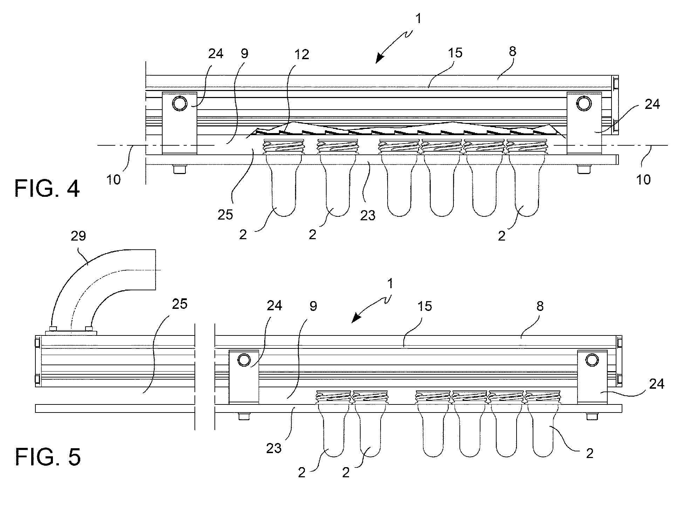

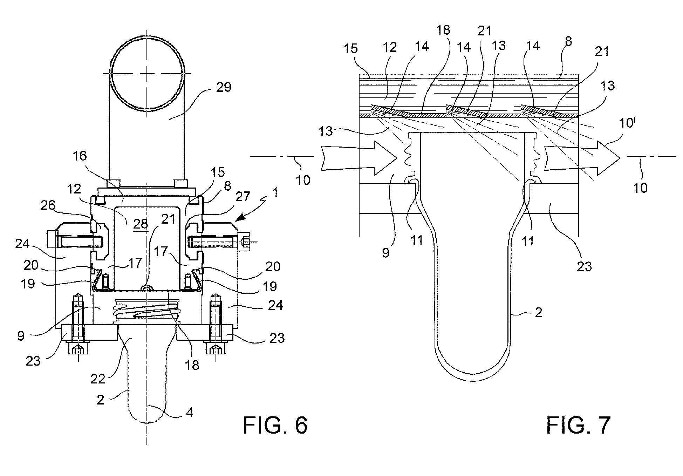

The inner cavity 28 of the upper wall 15 acts as a conduct for supplying the pumped or compressed air to the blowing openings 14 and can be in communication with a single supply tube 29 (figures 5, 6), or in the case of a very long conveyor, with several supply tubes 29 connected to the upper wall 15 in supply points distributed along the length of conveyor 1.

Preferably, the supply tube(s) 29 are connected to an upper, substantially planar surface of the upper wall 15 by means of a planar flange.

In a preferred embodiment, conveyor 1 does not have any side blowers and therefore the upper blowing openings 14 are the only blowing openings of conveyor 1.

In order to allow receiving and releasing the preforms 2, conveyor 1 has an inlet opening, preferably at an inlet end thereof, and an outlet opening, preferably at an outlet end thereof, both inlet and outlet openings in communication with channel 2.

In order to provide complete information, the invention further contemplates a system for orienting and singularizing preforms or similar objects, comprising conveyor 1 described hereto.

Obviously, a person skilled in the art, with the object of meeting contingent and specific needs, can make further changes and variations to conveyor 1 and to the system for orienting and singularizing preforms and similar objects according to the present invention, all of which still falling within the scope of protection of the invention, which is defined by the following claims.

## Claims

1. A conveyor (1) for conveying a single row of preforms (2) or similar objects of the type having a hollow body (3) extending along a longitudinal axis (4) and having a closed end (5) and an opposite open end (6),
the conveyor (1) comprising a support structure (8) which forms a channel (9) extending along a conveying path (10) and suitable for receiving a single row of preforms (2), and one or more support and sliding surfaces (11) extending along the conveying path (10) and suitable for supporting the preforms (2) in the channel (9), wherein the single preforms (2) are hung in the channel (9) with the open end (6) facing upward and with the closed end (5) facing downward,
wherein the conveyor (1) comprises a blowing system (12) which directs a plurality of air flows (13) into the channel (9) with a flow component facing in a conveying direction (10'), so that the thrust of the flow component on the preforms (2) received in the channel (9) moves the preforms (2) in the conveying direction (10') along the conveying path,
**characterized in that** the blowing system (12) forms a row of blowing openings (14) positioned at an upper wall (15) of the channel (9) and directed in tilted manner in the conveying direction (10') and downward.

2. A conveyor (1) according to claim 1, wherein the blowing openings (14) blow from a given distance directly into upper openings of the preforms (2) and hit concave inner surfaces of the preforms (2).

3. A conveyor (1) according to claim 1 or 2, wherein the upper wall (15) comprises:
- a first profile having a U-shaped section with the closed base (16) facing upward and with two side legs (17) protruding from the base (16) downward,
- a second profile having, in section, a middle portion (18) which closes the open side of the first U-shaped profile from the bottom, thus delimiting an inner cavity (28) of the upper wall (15), and also two side edges (19) bent toward the top and toward the inside of the upper wall (15) and which each engage a respective groove (20) formed on the outer surface of each side leg (17) of the first profile,
wherein the blowing openings (14) are formed in the middle portion (18) of the second profile.

4. A conveyor (1) according to claim 3, wherein the first profile is an extruded aluminum profile, the second profile is of metal sheet and the middle portion (18) is flat, and the engagement between the first and second profile is a snap engagement or an engagement by means of reciprocal insertion in conveying direction.

5. A conveyor (1) according to claim 3 or 4, wherein a plurality of bosses (21) protruding upward and open on the side opposite to the conveying direction (10') is formed in the middle portion (18) of the second profile so as to define the aforesaid blowing openings (14).

6. A conveyor (1) according to one of the preceding claims, wherein the blowing openings (14) are arranged in a single row extending along the conveying path (10) and aligned in the middle with respect to the upper wall (15).

7. A conveyor (1) according to one of the preceding claims, wherein the support surfaces (11) are formed by two elongated support plates (23) extending along the conveying path (10), the two support plates (23) being horizontally spaced apart from each other so as to delimit a guide slot (22) below the upper wall (15), in which guide slot (22) the preforms (2) are slidingly hung by means of a free abutment of a reference flange (7) thereof on the two support plates.

8. A conveyor (1) according to the preceding claim, wherein the elongated plates (23) are connected to the upper wall (15) by means of side connectors (24) which determine the exact relative position between the upper wall (15) and the support surfaces (11).

9. A conveyor (1) according to the preceding claim, wherein the connectors (24) or side walls are only present in discrete positions along the length of the conveyor (1), and the channel (9) in which the preforms (2) are hung is configured as a channel open downward and on the sides.

10. A conveyor (1) according to claim 8 or 9, wherein the side connectors (24) are connected to the upper wall (15) and/or to the support plates (23) by means of screwing with an auxiliary insert (26) slidingly positioned in a fixing groove (27) and adjustable in position along the conveying path (10).

11. A conveyor (1) according to one of the preceding claims, wherein the conveyor (1) does not have side blowers and the upper blowing openings (14) are the only blowing openings of the conveyor (1).

12. A system for orienting and singularizing preforms or similar objects, comprising:
- a coarse loading station with a storage container for receiving the loose objects,
- an orientation and singularization unit,
- a conveyor positioned to pick the objects from the storage container and to transport them loose to a supply basin of the orientation and singularization unit of the system,
- a conveyor (1) according to one of the preceding claims, the conveyor (1) being configured to receive the objects at the outlet of the orientation and singularization unit and to convey the objects along the conveying path (10) up to a release point.
